# EUROPÄISCHE PATENTSCHRIFT

(11) **EP 1 473 509 B1**
(45) Veröffentlichungstag und Bekanntmachung des Hinweises auf die Patenterteilung: **26.10.2005**
(21) Anmeldenummer: 03009640.8
(22) Anmeldetag: 29.04.2003
(51) Int. Cl.: F16M 11/06, A61G 12/00

(54) **Schwenkarm eines Deckenstativs**
Ceiling mount pivoting arm
Bras pivotant de support fixé au plafond

(43) Veröffentlichungstag der Anmeldung: 03.11.2004
(73) Patentinhaber: TRUMPF Kreuzer Medizin Systeme GmbH + Co. KG, 82178 Puchheim (DE)
(72) Erfinder: Bauer, Georg, 85221 Dachau (DE); Hiemer, Willibald, 81245 München (DE)
(74) Vertreter: Hofer, Dorothea

(56) Entgegenhaltungen:
- EP-A- 0 614 035
- DE-U- 29 515 709
- GB-A- 2 083 878
- US-A- 1 551 332
- US-A- 6 095 468

## Beschreibung

Die vorliegende Erfindung bezieht sich auf einen Schwenkarm eines Deckenstativ.

Es sind medizinische Deckenstative bekannt, die zur hängenden Aufnahme von medizinischen Geräten, wie beispielsweise Überwachungsmonitoren, Beatmungssystemen, Spritzenpumpen etc., dienen. Sie werden beispielsweise in Operationssälen oder Intensivräumen etc. für die Unterbringung der für Operationen, die Intensivpflege bzw. Untersuchung eines Patienten notwendigen Systeme verwendet.

Deckenstative bestehen aus mindestens einer vertikalen Säule und einem horizontalen schwenkbaren Arm, die über eine Drehverbindung drehbar an der Decke befestigt sind, und einem Geräteträger, auch Stativkopf genannt, in dem die notwendigen Geräte untergebracht sind. Durch den drehbar gelagerten Arm läßt sich der Stativkopf in einem gewünschten Radius verschwenken, wodurch der Zugang zum Patienten erleichtert wird. Der Stativkopf weist einen Handgriff auf, der dazu dient, den Stativkopf in eine gewünschte Position zu verschwenken.

Der Stativkopf kann an einem höhenverstellbaren Arm angebracht sein und kann dadurch zusätzlich zur Verschwenkbarkeit in seiner Höhenposition verstellt werden, indem der Arm motorisch verstellt wird. Der Hubantrieb wird über ein Bedienelement bzw. einen Schalter betätigt. Das Bedienelement ist in dem Handgriff vorgesehen.

Die gesamten Versorgungsleitungen und -schläuche für Strom, Druckluft, Sauerstoff und andere medizinische Gase, etc. werden aus der Decke durch die Lagerstellen hindurch in den Säulenelementen und den Schwenkarmen zum Stativkopf verlegt und dort über Steckverbindungen an die Geräte angeschlossen. Dadurch wird verhindert, daß Kabel und Schläuche am Boden verlegt werden müssen und das Risiko über die am Boden liegenden Kabel und Schläuche zu stolpern kann dadurch ausgeschaltet werden.

Die Schläuche und Kabel werden zu einem Kabelbaum bzw. Schlauchpaket zusammengefaßt und durch die Säulenelemente, die Lagerstellen und den Schwenkarm geführt. Seitlich am Schwenkarm sind abnehmbare Deckel angebracht. Für das Hindurchführen des Kabelbaums bzw. des Schlauchpakets durch die Verbindungs- bzw. Lagerstelle zwischen einem Säulenelement und einem Schwenkarm oder zwischen zwei Schwenkarmen wird der seitliche Deckel des Arms abgenommen, um den Kabelbaum ergreifen zu können. Da der von oben kommende Kabelbaum aufgrund des geschlossenen Armprofils nicht sofort im Schwenkarm umgelenkt werden kann, muß der Kabelbaum zunächst durch die seitliche Öffnung herausgezogen werden, dann um 180° geschwenkt und anschließend wieder in die seitliche Öffnung eingeführt werden, damit er dann im Schwenkarm weitergeschoben werden kann. Dieser Montageschritt ist jedoch sehr aufwendig und zeit- und damit kostenintensiv. Der Kabelbaum und das Schlauchpaket werden dabei mit einem sehr kleinen Radius gekrümmt, so dass die Gefahr besteht, dass Schläuche abknicken und empfindliche Kabel brechen.

Aus dem Dokument DE-U-29515709 ist ein Schwenkarm gemäß dem Oberbegriff des Anspruchs 1 bekannt.

Es ist daher Aufgabe der vorliegenden Erfindung, einen Schwenkarm bereitzustellen, der eine leichtere Verlegung des Kabelbaums ermöglicht.

Diese Aufgabe wird einem Deckenstativ gemäß Anspruch 1 gelöst. Vorteilhafte Weiterbildungen sind Gegenstand der Unteransprüche.

Durch das Vorsehen einer Montageöffnung in der Unterseite, gegenüber einer Öffnung des Arms, wird die Einführung des Kabelbaums bzw. des Schlauchpakets wesentlich erleichtert.

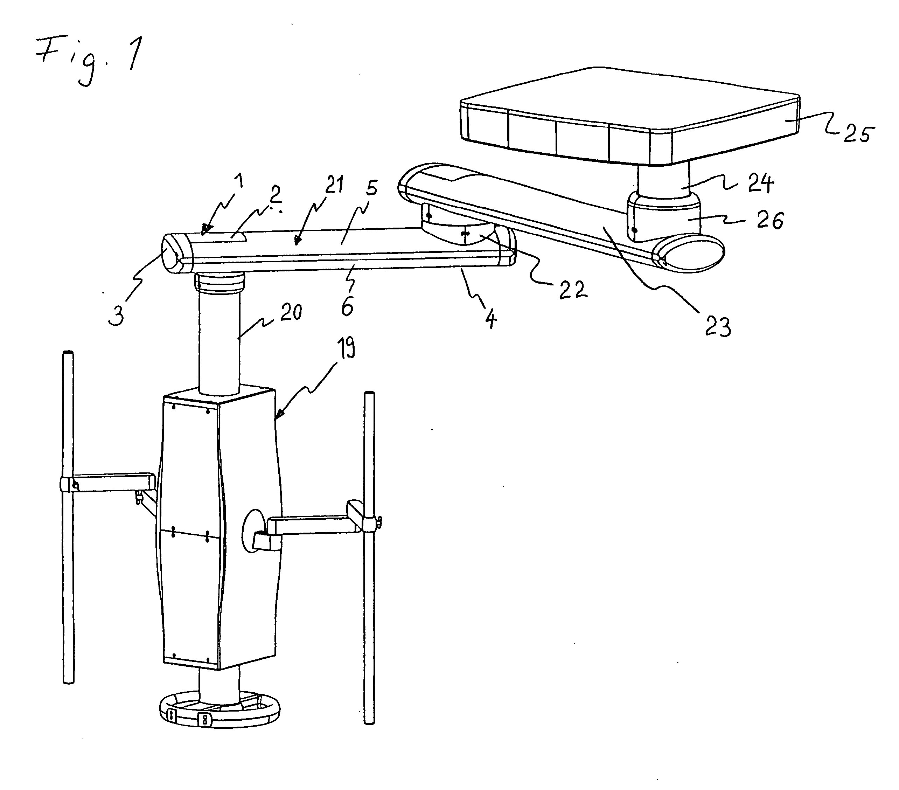

Die Montageöffnung wird durch eine Aussparung an der Unterseite ausgebildet. Selbstverständlich kann die Montageöffnung auch auf der Oberseite ausgebildet sein, wie beispielsweise in Fig. 1 gezeigt ist.

Durch die Kombination der Montageöffnung und der seitlichen Öffnung kann die manuelle Umlenkung des Kabelbaums bzw. des Schlauchpakets in vorteilhafter Weise erheblich vereinfacht werden.

Das Vorsehen eines längenverstellbaren abnehmbaren Bügels zwischen der Seitenöffnung und der Montageöffnung ermöglicht es, eine Deformation des Arms bzw. der Öffnungen in vorteilhafter Art und Weise zu verhindern bzw. rückgängig zu machen.

Nachfolgend wird die Erfindung anhand einer derzeit bevorzugten Ausführungsform unter Bezugnahme auf die beigefügten Figuren näher erläutert.
Fig. 1 ist eine perspektivische Gesamtdarstellung eines medizinischen Deckenstativs.
Fig. 2 ist eine perspektivische Ansicht eines erfindungsgemäßen Schwenkarms.
Fig. 3 ist eine perspektivische Explosionsdarstellung des erfindungsgemäßen Schwenkarms aus Fig. 2.
Fig. 4 ist eine perspektivische Ansicht eines erfindungsgemäßen Schwenkarms.

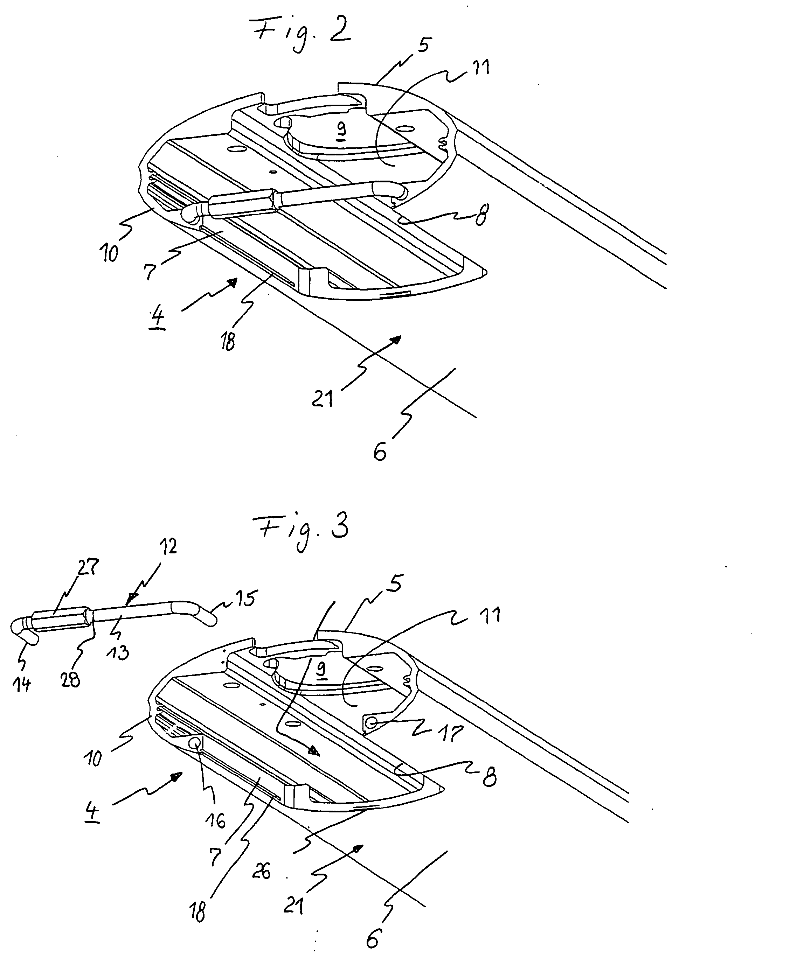

Gemäß Fig. 1 weist ein Deckenstativ einen Stativkopf 19 auf, der an einer vertikalen Säule 20 befestigt ist. Die Säule 20 ist wiederum an einem horizontalen schwenkbaren Arm 21 befestigt. Der Arm 21 ist über eine Drehverbindung 22 drehbar mit einem weiteren horizontalen schwenkbaren Arm 23 verbunden und letzterer ist über eine Drehverbindung 26 und ein kurzes vertikales Säulenstück 24 an einer Deckenaufnahme 25 angebracht. Der Arm 21 weist eine Oberseite 5, eine Unterseite 6 auf. An seinem linken Endabschnitt befindet sich eine nach oben geöffnete Montageöffnung 1, die mit einem Deckel 2 verschlossen ist, und an seinem rechten Endabschnitt befindet sich eine in Fig. 1 nicht sichtbare nach unten geöffnete Montageöffnung 4, die ebenfalls mit einem Deckel 2 verschließbar ist. Seitlich weist der Arm 21 einen abnehmbaren Deckel 3 auf, der eine Seitenöffnung 11 verschließt, die beispielsweise in Fig. 2 gezeigt ist.

In den Fig. 2 bis 4 ist die Montageöffnung 4 dargestellt, die in Fig. 1 nicht sichtbar ist, die sich im rechten Endabschnitt des Arms 21 auf dessen Unterseite 6 befindet. Die Montageöffnung 4 ist im wesentlichen rechtwinklig ausgebildet und besitzt einen linken Rand 7 und einen rechten Rand 8. Gegenüber der Montageöffnung 4 ist im Arm 21 eine Öffnung 9 für eine Lagerstelle vorgesehen, an der die Drehverbindung 22 befestigt wird. Die Montageöffnung 4 ist größer dimensioniert als die Öffnung 9. In der vorliegenden Ausführungsform reicht die Montageöffnung 4 bis zu einem seitlichen Außenrand 10. Dadurch ist die Montageöffnung 4 direkt mit der Seitenöffnung 11 verbunden. Die aus der Seitenöffnung 11 und der Montageöffnung 4 kombinierte Öffnung ist ausreichend groß, um einen nicht gezeigten Kabelbaum bzw. ein Schlauchpaket von der Öffnung 9 der Lagerstelle mit der Hand direkt in den Arm 21 umzuleiten, wie durch einen Pfeil in Fig. 3 angedeutet ist. Ein umständliches Ausfädeln, anschließendes Umbiegen um 180° und erneutes Einfädeln in den Arm 21 kann somit vermieden werden.

Durch die Kombination der Montageöffnung 4 mit der Seitenöffnung 11 sind der linke Rand 7 und der rechte Rand 8 nicht mehr direkt miteinander verbunden. Wird der Arm 21 auf der anderen, der Montageöffnung 4 und der Öffnung 9 in Längsrichtung des Arms gegenüberliegenden Seite axial belastet, wird der linke und der rechte Rand 7, 8 deformiert. Dies hat zur Folge, daß weder der Deckel 2 für die Montageöffnung 4 noch der seitliche Deckel 3 für die Seitenöffnung 11 in die jeweiligen Öffnungen passen.

Um die Deformation zu verhindern, ist ein Bügelelement 12 vorgesehen, das insbesondere in Fig. 3 gut erkennbar ist, da es dort als Einzelteil dargestellt ist. Es weist einen länglichen Abschnitt 13 auf, der an seinen beiden Enden einen rechtwinklig gebogenen Abschnitt 14, 15 besitzt. Die gebogenen Abschnitte 14, 15 sind in in der Stirnseite des Armprofils vorgesehenen Bohrungen 16, 17 eingesteckt und halten den linken Rand 7 und den rechten Rand 8 zusammen.

Das Bügelelement 12 ist mit einer Spannmutter 27 versehen, mit der die Länge des länglichen Abschnitts 13 einstellbar ist. Im Folgenden wird die Funktion des Bügelelements 12 näher erläutert. Wenn der Arm 21 an der der Montageöffnung 4 gegenüberliegenden Seite aufgehängt wird und das mit der Montageöffnung 4 ausgestattete freie Ende durch das Eigengewicht des Arms nach unten gezogen wird, steht der Bügel 12 unter Spannung. Zur Verlegung des Kabelbaums bzw. des Schlauchpakets im belasteten Zustand des Stativs werden zuerst der Deckel 2 für die Montageöffnung 4 und der seitliche Deckel 3 für die Seitenöffnung 11 abgenommen. Anschließend wird die Spannmutter 27 so verdreht, daß der Bügel 12 nicht mehr unter Spannung steht. Dann können die umgebogenen Enden 14 und 15 ohne weiteres aus den Bohrungen 16 und 17 herausgezogen werden, so daß ein ungehinderter Zugang aus der Kombination der Montageöffnung 4 und der seitlichen Öffnung 11 entsteht. Anschließend kann das Verlegen des Kabelbaums bzw. des Schlauchpakets (in den Fig. nicht dargestellt) erfolgen, wobei ein direktes Umleiten manuell ohne weiteres möglich ist.

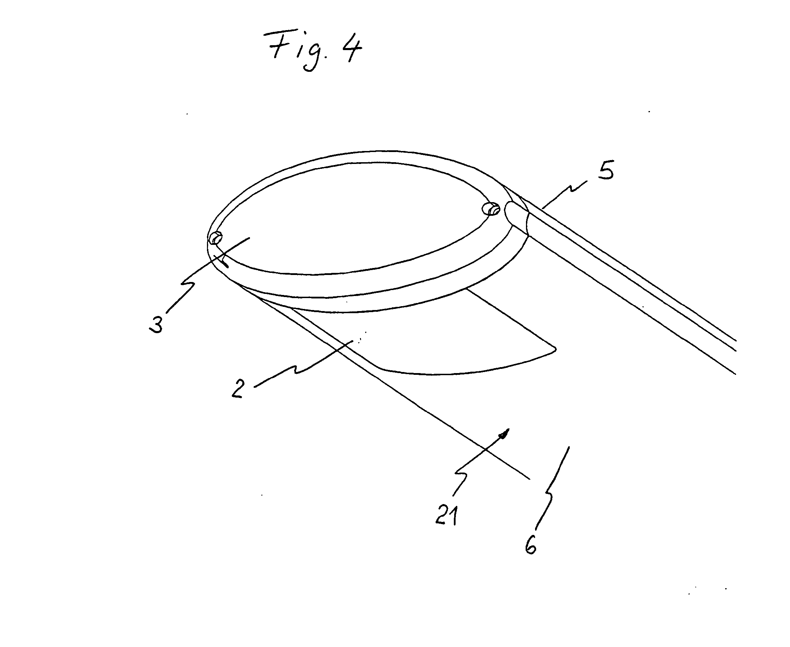

Wenn der Bügel 12 aus dem Arm 21 entfernt wird, deformiert sich der Profilquerschnitt des Arms 21. Der Abstand zwischen dem linken Rand 7 und dem rechten Rand 8 ändert sich. Dadurch kann weder der Deckel 2 noch der seitliche Deckel 3 wieder ohne weiteres auf die Öffnungen montiert werden. Um die Montage der Deckel zu ermöglichen, wird daher der Bügel 12 mittels der Spannmutter 27 auf die passende Länge eingestellt, die dem momentanen Abstand zwischen den beiden Bohrungen 16 und 17 entspricht. Dann kann der umgebogene Teil 14 und 15 des Bügels 12 wieder in die Bohrungen 16, 17 eingesteckt werden. Anschließend wird der Abstand des linken und rechten Rands 7 und 8 durch passendes Verdrehen der Spannmutter 27 so eingestellt, daß sowohl der Deckel 2 als auch der seitliche Deckel 3 wieder ungehindert in die dafür vorgesehenen Öffnungen 4 und 11 eingeführt werden können. Dabei wird der Deckel 2 in dafür vorgesehene Führungsschienen 18 eingeschoben, wobei der Deckel dazu passende Einschubkanten (nicht gezeigt) besitzt. Am Ende der Montageöffnung 4 in Fig. 3 ist ein Schlitz 26 vorgesehen, in den ebenfalls ein Vorsprung (nicht gezeigt) des Deckels 2 eingeschoben wird. Schließlich wird gemäß Fig. 4 der seitliche Deckel 3 mit nicht dargestellten Schrauben am offenen Profilquerschnitt des Arms 21 verschraubt, um die Seitenöffnung 11 zu verschließen.

In Fig. 4 ist der Arm 21 gezeigt, wie der Deckel 2 die Montageöffnung 4 und der seitliche Deckel 3 die Seitenöffnung 11 verschließen. Der Deckel 2 ist dabei auf der nicht dargestellten zur Innenseite des Arms 21 zeigenden Seite mit einer Aussparung ausgebildet, damit der Bügel 12 darin untergebracht werden kann.

## Patentansprüche

1. Schwenkarm eines Deckenstativs aus einem Hohlprofil mit einer Oberseite (5) und einer gegenüberliegenden Unterseite (6), einer dem Profilquerschnitt entsprechenden mit einem Deckel (3) verschließbaren Seitenöffnung (11), einer in der Oberseite (5) vorgesehenen oberen Öffnung (9) für eine Lagerstelle und einer der oberen Öffnung gegenüberliegend angeordneten unteren Montageöffnung (4) in der Unterseite, wobei die Montageöffnung (4) und die Seitenöffnung (11) einstückig ausgebildet sind, **dadurch gekennzeichnet, daß** die Montageöffnung (4) einen linken Seitenrand (7) und einen rechten Seitenrand (8) aufweist, und daß an der Seitenöffnung (11) zur Montageöffnung (4) hin ein abnehmbarer Bügel (12) vorgesehen ist, der die beiden Seitenränder miteinander verbindet.

2. Schwenkarm nach Anspruch 1, **dadurch gekennzeichnet, daß** die Montageöffnung (4) durch eine Aussparung an der Unterseite (6) ausgebildet ist.

3. Schwenkarm nach Anspruch 1 oder 2, **dadurch gekennzeichnet, daß** die Montageöffnung (4) größer als die obere Öffnung (9) ist.

4. Schwenkarm nach Anspruch 1, **dadurch gekennzeichnet, daß** der Bügel (12) in seiner Länge einstellbar ist.

5. Schwenkarm nach einem der vorhergehenden Ansprüche, **gekennzeichnet durch** einen seitlichen Deckel (3) für die Abeckung der Seitenöffnung (11) und **durch** einen Deckel (2) zur Abdeckung der Montageöffnung (4).

## Claims

1. Swivel arm of a ceiling-mounted stand made of a hollow profile and comprising an upper side (5) and a bottom side (6) arranged opposite thereto, a lateral opening (11) that corresponds to the profile cross-section and can be closed with a cover (3), an upper opening (9) in the upper side (5) that is provided for a bearing point, and a lower mounting opening (4) in the bottom side that is arranged opposite to the upper opening, wherein the mounting opening (4) and the lateral opening (11) are formed in one piece,
**characterized in that** the mounting opening (4) comprises a left lateral edge (7) and a right lateral edge (8) and that a removable bracket (12) that connects the two lateral edges to each other is provided at the lateral opening (11) in the direction towards the mounting opening (4).

2. Swivel arm according to Claim 1, **characterized in that** the mounting opening (4) is formed by a cutout on the bottom side (6).

3. Swivel arm according to Claim 1 or 2, **characterized in that** the mounting opening (4) exceeds the upper opening (9) in size.

4. Swivel arm according to Claim 1, **characterized in that** the length of the bracket (12) can be adjusted.

5. Swivel arm according to anyone of the preceding claims, **characterized by** a lateral cover (3) intended for covering the lateral opening (11) and by a cover (2) intended for covering the mounting opening (4).

## Revendications

1. Bras pivotant d'un support fixé au plafond, formé d'un profilé creux, ayant une face supérieure (5) et une face inférieure (6) opposées, une ouverture latérale (11), correspondant à la section transversale du profilé et obturable avec un couvercle (3), une ouverture supérieure (9) prévue dans la face supérieure (5), pour un point de tourillonnement, et une ouverture de montage inférieure (4), en face inférieure, disposée à l'opposé de l'ouverture supérieure, où l'ouverture de montage (4) et l'ouverture latérale (11) sont réalisées d'une seule pièce, **caractérisé en ce que** l'ouverture de montage (4) présente un bord latéral gauche (7) et un bord latéral droit (8), et **en ce que**, sur l'ouverture latérale (11), est prévu un étrier (12), amovible par rapport à l'ouverture de montage (4) et reliant ensemble les deux bords latéraux.

2. Bras pivotant selon la revendication 1, **caractérisé en ce que** l'ouverture de montage (4) est formée par un évidement ménagé en face inférieure (6).

3. Bras pivotant selon la revendication 1 ou 2, **caractérisé en ce que** l'ouverture de montage (4) est plus grande que l'ouverture supérieure (9).

4. Bras pivotant selon la revendication 1, **caractérisé en ce que** la longueur de l'étrier (12) est réglable.

5. Bras pivotant selon l'une des revendications précédentes, **caractérisé par** un couvercle latéral (3), devant couvrir l'ouverture latérale (11), et par un couvercle (2), devant couvrir l'ouverture de montage (4).
